# EUROPEAN PATENT APPLICATION

(11) **EP 4 832 281 A1**
(43) Date of publication of application: **28.10.2026**
(21) Application number: 25172639.4
(22) Date of filing: 25.04.2025
(51) Int. Cl.: H02H 3/28, H02H 3/42, H02H 7/26

(54) **METHOD AND SYSTEM FOR SECURITY ENHANCEMENT OF DIFFERENTIAL PROTECTION**

(71) Applicant: Hitachi Energy Ltd, 8050 Zürich (CH)
(72) Inventor: Tajdinian, Mohsen, 723 46 Västerås (SE); Wang, Jianping, 724 60 Västerås (SE); Gore, Rahul, 12834 Stockholm (SE); Hoq, Md Tanbhir, 722 46 Västerås (SE)
(74) Representative: AWA Sweden AB

(57) **Abstract**

The present disclosure relates to a method for differential protection of a power line (PL) electrically connected between a first substation (10A) and a second substation (10B) of an electrical power system (EPS), the method implemented by at least a first protective relay arranged at the first substation (10A), the method comprising: receiving local current and voltage data indicative of each phase of local current and local voltage of the power line (PL) at the first substation (10₁) and remote current and voltage data indicative of each phase of remote current and remote voltage of the power line (PL) at the second substation (10₂); determining whether a plurality of internal fault conditions are satisfied based on a comparison of said local current and voltage data and said remote current and voltage data, and if said plurality of internal fault conditions are satisfied, generating a first tripping signal to a first circuit breaker (CB₁) to disconnect the power line (PL) from the first substation (10₁), wherein said plurality of internal fault conditions comprises: at least one internal fault detection condition comprising a first internal fault detection condition and a second fault detection condition, wherein the first and second internal fault detection conditions are given by *Diff*_{p_based} *> Kᵣ* × *Restraint_{p_based}* and *Diff*_{*p*_based} *> P_{pickup_setting}* wherein *Diff*_{p_based} corresponds to an active power based differential quantity, *Restraint*_{*p*_based} corresponds to an active power-based restraint quantity, *Kᵣ* corresponds to a scaling parameter, and *P_{pickup_setting}* corresponds to a threshold level for the active power based differential quantity. A protection system and an electrical power system are also disclosed.

## Description

### Technical Field

The present disclosure relates to a method and system for security enhancement of differential protection, and an electrical power system comprising said system.

### Background

Differential protection is a method used to protect components of an electrical power system within a protected zone, such as transmission lines, generators, and bus sections. The protected zone is typically delimited by circuit breakers, which, when activated, isolate both the protected zone and any elements within it. Activation of the circuit breakers is controlled by at least one protective relay. The protective relay operates by comparing current measurements from current transformers (CTs) placed at both ends of the protected zone. Notably, the protective relay may receive one (local) current measurement locally from a CT at its own location and another (remote) current measurement remotely via a communication channel from a CT at the other end of the protected zone. Based on this comparison, the protective relay detects whether the differential current, the difference between the measured currents, exceeds a predefined threshold. Under normal operating conditions, the differential current is negligible, but during an internal fault, the differential current becomes significant, prompting the protective relay to send a tripping signal to at least one circuit breaker to isolate the protected zone.

Recently, customer demand for cost-effective medium-voltage (MV) line differential protection has increased due to the higher protection challenges posed by renewable energy integration at these voltage levels. Additionally, the growing capability of non-dedicated communication networks-such as wireless networks-has made it possible to achieve the required performance levels for reliable protection solutions. However, as non-dedicated networks are generally less efficient than dedicated ones, differential protection may preferably be able to operate effectively under less-than-ideal network conditions (e.g., higher time synchronization errors, latency, etc.).

In view of the above, there is a need for improved differential protection.

### Summary

It is an object of the present disclosure to provide an improved solution that alleviates at least some drawbacks with present solutions or improves over present solutions in at least one aspect or provides an alternative over present solutions in at least one aspect. This and/or at least one other object, which will be implicitly or explicitly detailed in the following disclosure, is solved by one or more of the inventions defined in the claims. Additional advantageous embodiments are described in the following.

The present disclosure is based on the inventors' realization that a method for differential protection may be enhanced by implementing at least one internal fault condition based on an active power-based differential quantity and an active power-based restraint quantity which may provide improved stability during external faults. This may be less sensitive to current transformer (CT) saturation during external faults, which can otherwise cause false tripping in conventional methods of differential protection. For instance, the active power-based differential quantity and the active power-based restraint quantity may include a differential active power and a restraint active power, respectively, for each phase in a power line. Further, the active power-based differential quantity and the active power-based restraint quantity may include a differential active composite power and a restraint active composite power, respectively.

The differential protection method disclosed herein may be applied to various types of power lines. A power line typically comprises one or more conductors for transmitting electrical power between substations or other points in the grid. In a three-phase system, a power line may include three conductors, each carrying a respective phase of alternating current (AC), typically referred to as Phase A, Phase B, and Phase C. The differential protection method described herein can be applied to monitor and compare the currents in each phase across these conductors, allowing for accurate fault detection and system protection regardless of the specific configuration of the power line.

The method for differential protection disclosed herein is used for providing differential protection to at least one component within a protected zone. The protected zone is bounded by circuit breakers which may upon activation isolate the protected zone. Although the following is described in the context of differential protection of a power line between two substations, the method for differential protection may be applicable to any component electrically connected between two circuit breakers.

The term substation may refer to any physical or functional arrangement of electrical components-whether fixed or mobile, centralized or distributed-that comprises means for differential protection, such as a protective relay and a circuit breaker, but optionally also a current transformer and/or a voltage transformer. A substation may be a traditional facility or a standalone arrangement. Two or more substations may define a protected zone between them, which can be isolated by corresponding two or more circuit breakers.

According to a first aspect of the present disclosure, a method for differential protection of a power line is provided. The power line is electrically connected between a first substation and a second substation of an electrical power system. The method is implemented by at least a first protective relay arranged at (or comprised in) the first substation. The method comprises: receiving local current and voltage data indicative of each phase of local current and local voltage of the power line at the first substation and remote current and voltage data indicative of each phase of remote current and remote voltage of the power line at the second substation. The method comprises: determining whether a plurality of internal fault conditions is satisfied based on a comparison of said local current and voltage data and said remote current and voltage data. The method comprises, if said plurality of internal fault conditions are satisfied, generating a first tripping signal to a first circuit breaker to disconnect the power line from the first substation. The plurality of internal fault conditions comprises at least one internal fault detection condition comprising a first internal fault detection condition and a second fault detection condition, wherein the first and second internal fault detection conditions are given by ${Diff}_{p_based} > {K}_{r} \times {Restraint}_{p_based}$ ${Diff}_{p_based} > {P}_{pickup_setting}$ wherein *Diff*_{p_based} corresponds to an active power-based differential quantity being the difference between a local active power-based quantity based on the local current and voltage data and a remote active power-based quantity based on the remote current and voltage data, *Restraint*_{p_based} corresponds to an active power-based restraint quantity based at least on the local active power-based quantity and the remote active power-based quantity, *K*ᵣ corresponds to a scaling parameter, and *P*_{pickup_setting} corresponds to a threshold level for the active power-based differential quantity.

The method may advantageously improve security enhancement of differential protection. As the method is active power-based, the method is less sensitive to CT saturation during external faults, which can otherwise cause false trips in conventional methods of differential protection. Further, the method may advantageously be used for differential protection of Medium Voltage (MV) power lines.

Moreover, by also taking into account a differential current and a restraint current, the method may also advantageously make it possible to distinguish between internal faults and external faults. This may reduce the risk of maloperation, i.e., a protective relay generates a tripping signal to a circuit breaker to disconnect the power line (or a component in general) for external faults. In particular, the restraint current may represent a reference current entering and leaving a protected zone and provides a threshold to differentiate between internal faults and external faults or inrush currents. If the differential current exceeds a certain proportion of the restraint current, the protective relay generates the tripping signal to at least the first circuit breaker (optionally to any circuit breakers required to be activated to isolate the protected zone); otherwise, it avoids generating the tripping signal, i.e., the protective relay restrains the tripping, to avoid unnecessary activation. The restraint current may facilitate a protective relay to only respond to internal faults.

The method may implement phasor-based differential protection. In other words, voltages, currents, active power or active power quantities may be described using phasors. The method may comprise communicating phasors between a first protective relay and a second protective relay, meaning that a local protective relay may obtain at least one remote phasor quantity from a remote protective relay and vice versa.

To determine a phasor quantity for a given power line or a phase thereof, the corresponding quantity is measured.

For instance, a current may be based on a current measurement provided by means of a current transformer (CT). The CT generates a secondary current proportional to the primary current in the power line. The current waveform is then sampled locally at a sufficiently high sampling frequency, typically in the range between 1 kHz to 4 kHz sampling frequency. This ensures the accuracy of the measurements, particularly in systems with higher frequencies or fast transients.

The sampled current data may then be processed using a Fast Fourier Transform (FFT) (e.g., in discrete form) to convert the time-domain current waveform into the frequency domain. The FFT identifies the amplitude and phase of each frequency component of the current, allowing for the extraction of the fundamental frequency component (e.g., 50 or 60 Hz in most power systems).

From the FFT results, the magnitude of the fundamental frequency component may be extracted. The phase angle of the fundamental frequency component is also extracted from the FFT (e.g., in discrete form), indicating the phase shift relative to a reference signal (such as a voltage reference obtained via a voltage transformer, VT).

The current phasor may then be represented as a complex number as: ${I}_{x , local} = {I}_{x , local} ∠ {θ}_{x , local}$ wherein
*I*_{x,local} is the magnitude of the local current, and
*θ*_{x,local} is the phase angle of the current relative to the reference.

A local current phasor may be determined by a protective relay based on local current measurements. Alternatively, local current phasor may be determined by a phasor measurement unit, PMU, which may be separate from or integrated with the local protective relay. Current measurements obtained via the CT may be fed into the PMU, which then calculates the phasor representation of the current. In this way, CTs may be used to measure the current, and PMUs may be used to convert this current measurement into a current phasor.

A voltage may be based on a voltage measurement provided by means of a voltage transformer (VT). A phasor of the voltage may be determined using a process similar as, or analogous to, the process described in relation to the current phasor. An active power phasor or an active power-based quantity phasor may be calculated based at least on the current phasor and the voltage phasor. Local phasors and remote phasors may each be determined using the approach above.

According to one embodiment, *Diff*_{p_based} is a differential active power *Diff*_{p,x} based at least on a difference between a local active power based on the local current and voltage data and a remote active power based on the remote current and voltage data, wherein *Restraint_{p_based}* is a restraint active power *Restraint_{p,x}* based at least on the local active power and the remote active power, and *P_{pickup_setting}* corresponds to a threshold level for the active power, wherein x indicates phase of current and voltage. The method may advantageously provide differential protection for each phase of the power line individually. For instance, the power line may provide three-phase power transfer, and each conductor of the power line may be protected by a respective differential protection.

According to one embodiment, *Diff*_{p_based} is a differential active composite power *Diff*_{p_cmp} based at least on a difference between a local active composite power calculated based at least on local sequence components active power and a remote active composite power calculated based at least on remote sequence components active power, wherein the local sequence components active power and the remote sequence components active power are based at least on the local current and voltage data and the remote current and voltage data, respectively, wherein *Restraint_{p_based}* is a restraint active composite power *Restraint_{p_cmp}* based at least on the local active composite power and the remote active composite power, and *P_{pickup_setting}* corresponds to a threshold level for the active composite power. The method may advantageously provide differential protection which utilizes information from all phases in combination. The method may nonetheless enable individual differential protection of conductors of the power line.

According to one embodiment, the plurality of internal fault conditions comprises: at least one internal fault discrimination condition comprising a first internal fault discrimination condition given by ${IEFD}_{x , local} or {IEFD}_{x , remote} > {IEFD}_{Th , x}$ wherein *IEFD*_{x,local} and *IEFD*_{x*,*remote} correspond to a respective local and remote internal/external fault discrimination, IEFD, index determined as ${IEFD}_{x , local} = \frac{\left|{I}_{x , local}\right|}{\left|{I}_{x , remote}\right|} {IEFD}_{x , local} = \frac{\left|{I}_{x , remote}\right|}{\left|{I}_{x , local}\right|}$ wherein *IEFD*_{Th,x} corresponds to an IEFD index threshold indicative of an internal fault, wherein for phase power, x represents a respective phase of current, and wherein for composite power, x represents positive sequence component. The method may thus advantageously further distinguish between internal fault and external fault.

According to one embodiment, the IEFD index threshold is a predetermined IEFD index threshold. In a non-limiting example, the IEFD index threshold may be set equal to 2. However, the IEFD index threshold may be selected to any other appropriate value, such as a value in an interval of 1.1 to 3 or more than 3.

According to one embodiment, the IEFD index threshold is an adaptive IEFD index threshold based at least on the local current data and the remote current data. The adaptive IEFD index threshold may be dynamically updated over time based on the local current data and the remote current data.

According to one embodiment, the adaptive IEFD index threshold is updated by ${IEFD}_{Th , x} = {IEFD}_{Th , x , 0} + \left(1-max\left(Δ{IEFD}_{x , local},Δ{IEFD}_{x , remote}\right)\right)$ wherein *IEFD*_{Th,x,0} is a predetermined initial threshold, and Δ*IEFD*_{x,local} and Δ*IEFD*_{x,remote} correspond to respective IEFD index derivatives determined as $Δ {IEFD}_{x , local} = \frac{{\sum }_{i - N}^{N} {IEFD}_{x , local , i}}{N} Δ {IEFD}_{x , remote} = \frac{{\sum }_{i - N}^{N} {IEFD}_{x , remote , i}}{N}$ wherein *IEFD*_{x,local,i} and *IEFD*_{x,local,i} correspond to samples of the respective IEFD indices and N indicates the number of samples. The predetermined initial threshold *IEFD*_{Th,x,0} may be selected to an appropriate level. The method may thus advantageously revise the threshold based on present operating conditions.

According to one embodiment, wherein said plurality of internal fault conditions comprises: at least one internal fault discrimination condition comprising a second internal fault discrimination condition given by ${T}_{hold _ time} > {T}_{predetermined _ th}$ wherein *T_{hold_time}* corresponds to a holding time indicative of whether a time discrepancy between a first timing of the local current and voltage data and a second timing of the remote current and voltage data exceeds a predetermined time period, wherein *T_{predetermined_th}* corresponds to a predetermined time period accounting for Maximum Synchronization Error Time, Communication Latency, and/or a safety of margin. The second internal fault discrimination condition may be referred to as Imperfect Communication Condition.

According to one embodiment, the local current and voltage data and the remote current and voltage data comprise sample-based values and/or phasor-based values of the local current and the remote current and/or the local voltage and the remote voltage, respectively.

According to one embodiment, the method is implemented by the first protective relay and a second protective relay, wherein the first tripping signal is generated by the first protective relay to activate the first circuit breaker and a second tripping signal is generated by the second protective relay to activate a second circuit breaker for disconnecting the power line from the second substation.

According to one embodiment, the first tripping signal and the second tripping signal are only generated when the first protective relay and the second protective relay have exchanged information indicating that at least one of the first protective relay and the second protective relay has determined that the at least one internal fault condition is satisfied. In this way, the protective relays may reach consensus whether there is an internal fault, and then generate the respective tripping signals to activate the respective circuit breakers.

According to one embodiment, a communication link between the first substation and the second substation is established via a non-dedicated communication network or an optical fibre cable. A communication link may be established between protective relays of an electrical power system to enable real-time data exchange for fault detection, isolation, and power network protection. The communication link may be implemented via fibre optics, or wireless communication, facilitating coordination of relay operations. The protective relays may exchange a local current phasor with one another, so that each protective relay obtains a local current phasor and a remote current phasor. The protective relay implementing the method may monitor characteristics of the non-dedicated communication network, such as latency.

According to one embodiment, the method is applied for each phase of currents in the power line comprising A, B, C three phase conductors. The method may be applied individually to each phase current in the power line to detect and isolate faults occurring in one or more phases.

According to a second aspect of the present disclosure, a differential protective system for differential protection of a power line is provided. The power line is electrically connected between a first substation of an electrical power system and a second substation, the differential protective system configured to be arranged at the first substation and be communicatively connected to at least a first circuit breaker for disconnecting the power line from the first substation, the protective system comprising: at least one protective relay configured to perform the method according to the first aspect or any embodiment thereof.

The protective system may be configured to communicate with a corresponding protective system at a second substation via a communication link to exchange current phasor measurements.

The protective system may be configured to measure and compare phase currents for each phase of the power line to detect differential current indicative of an internal fault condition or an external fault condition. Alternatively, or in combination, the protective system may be configured to measure and compare active power for each phase of the power line to detect differential active power indicative of an internal fault condition or an external fault condition.

The protective system may be operatively connected to a circuit breaker and configured to generate a tripping signal when the differential current exceeds a predefined threshold. The tripping signal may be generated by a protective relay of the protective system.

The protective system may comprise a current transformer (CT), such as the CT described in the context of the first aspect of the disclosure. The protective system may comprise a phasor measurement unit (PMU), such as the CT described in the context of the first aspect of the disclosure. The protective system may comprise a communication interface configured to be communicatively connected to the protective relay and allow communication between the protective relay and the communication link. The protective system may comprise a voltage transformer (VT), such as the VT described in the context of the first aspect of the disclosure.

According to a third aspect of the present disclosure, an electrical power system is provided. The electrical power system comprises: a first substation comprising a first circuit breaker; a power line configured to be electrically connected between the first substation and a second substation, and the differential protective system according to the second aspect or any embodiment thereof, wherein a first protective relay of the at least one protective relay is arranged at the first substation.

According to one embodiment, the electrical power system comprises the second substation, wherein a second protective relay of the at least one protective relay is arranged at the second substation. The second protective relay may be comprised in a second protective system configured to be arranged at the second substation. The second protective system may be configured as the first protective system.

According to one embodiment, the power line is a medium voltage, MV, power line, a low voltage, LV, power line, or a high voltage, HV, power line.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts. HV may however refer to electrical voltage levels equal to or greater than 115 kV.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads. MV may however refer to electrical voltage levels equal to or greater than 10 kV but less than 66 kV (and HV being equal to or greater than 66 kV).

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries. However, LV may refer to 1000V or less (in which case MV is at least greater than 1000V but less than 35 kV or 66 kV).

Any one power line connected between the first substation and the second substation may be any one of a HV, MV, or LV power line.

In particular, the method for differential protection of the present disclosure is advantageous for differential protection of a MV power line.

According to a fourth aspect, a computer program is provided. The computer program comprises instructions which, when the program is executed by a computer, cause the computer to carry out the method according to the first aspect or any embodiments thereof.

According to a fifth aspect, a computer-readable storage medium is provided. The computer-readable storage medium comprises instructions which, when executed by a computer, cause the computer to carry out the method according to the first aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1a schematically illustrates a portion of an electrical power system comprising a power line comprising A, B, C phase conductors, and at least a first substation electrically connected to a second substation, and protective relays arranged at the respective substation implementing a method for differential protection according to some embodiments;
Fig. 1b schematically illustrates an electrical power system according to some embodiments, wherein the electrical power system comprises a protected component within a protected zone bounded by two circuit breakers;
Fig. 2 schematically illustrates a flow chart of a method for differential protection according to some embodiments;
Fig. 3 illustrates graphs of various aspect of the electrical power system when at least partially protected by a method for differential protection according to some embodiments;
Fig. 4 schematically illustrates a flow chart of a method for differential protection according to some embodiments, and
Fig. 5 illustrates graphs of various aspect of the electrical power system when at least partially protected by a method for differential protection according to some embodiments.

### Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

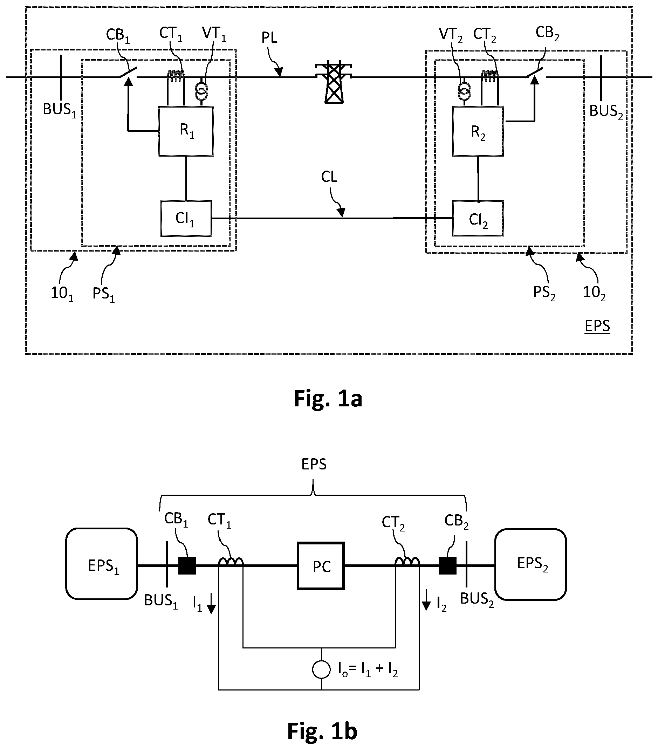

Fig. 1a schematically illustrates a portion of an electrical power system EPS comprising a power line PL. As a non-limiting example, the power line PL comprises A, B, C three phase conductors. However, the power line PL may comprise any other number of phase conductors. The electrical power system EPS comprises at least a first substation 10₁ configured to be electrically connected to a second substation 10₂. The electrical power system EPS comprises at least a first protective relay R₁ arranged at the first substation 10₁ implementing a method for differential protection according to some embodiments. A second protective relay R₂ may be arranged at the second substation 10₂. The electrical power system EPS may comprise the second substation 10₂. According to a non-limiting example, the power line PL is a medium voltage, MV, power line.

The first protective relay R₁ is comprised in a first protective system PS₁. The first protective system PS₁ may comprise at least one current transformer, CT₁. Each current transformer of the first protective system PS₁ may be configured to provide a current measurement of a respective phase current in the power line PL at the first substation 10₁. The first protective system PS₁ may comprise at least one voltage transformer, VT₁. Each voltage transformer of the first protective system PS₁ may be configured to provide a voltage measurement corresponding to a phase voltage associated with the respective phase current in the power line PL at the first substation 10₁. The current measurement(s) and the voltage measurement(s) provided by the current transformer(s) and voltage transformer(s) of the first protective system PS₁ may be referred to as local current and voltage data.

Likewise, the second protective relay R₂ may be comprised in a second protective system PS₂. The second protective system PS₂ may comprise at least one current transformer, CT₂. Each current transformer of the second protective system PS₂ may be configured to provide a current measurement of a respective phase current in the power line PL at the second substation 10₂. The second protective system PS₂ may comprise at least one voltage transformer, VT₂. Each voltage transformer of the second protective system PS₂ may be configured to provide a voltage measurement corresponding to a phase voltage associated with the respective phase current in the power line PL at the second substation 10₂. The current measurement(s) and the voltage measurement(s) provided by the current transformer(s) and voltage transformer(s) of the first protective system PS₁ may be referred to as remote current and voltage data.

The first protective relay R₁ may receive remote current and voltage data via a communication link CL, which may be an optical fiber cable or a non-dedicated communication network (such as ethernet-based communication network or a cloud-based communication network). The first protective relay R₁ may be configured to be communicatively connected to the communication link via a first communication interface CI₁. The second protective relay R₂ may be configured to be communicatively connected to the communication link via a second communication interface CI₂. The second protective relay R₂ may receive the local current and voltage data via the communication link CL. The first protective relay R1 may implement the method for differential protection of the present disclosure according to any one embodiment thereof. The second protective relay R2 may implement the method for differential protection of the present disclosure according to any one embodiment thereof. For the second protective relay R2, then the local and remote data or parameters may be reversed (i.e., the remote current and voltage data for the first protective relay R₁ is the local current and voltage data for the second protective relay R₂).

The first protective relay R₁ may be configured to be communicatively connected to a first circuit breaker CB₁. The second protective relay R₂ may be configured to be communicatively connected to a second circuit breaker CB₂. The first protective relay R₁ and the second protective relay R₂ may cooperate to provide differential protection of the power line PL. When the method for differential protection implemented by the first protective relay R₁ or the second protective relay R₂ detects a disturbance as an internal fault, then the respective protective relay may generate a tripping signal to active the corresponding circuit breaker CB₁, CB₂.

Also, as illustrated in Fig. 1a, the electrical power system may comprise a first bus BUS₁ and a second bus BUS₂ by which the electrical power system may electrically connect with other electrical power systems. In an electrical power system, a bus is a conductive node that serves as a central junction for distributing electrical power among various system components, including generators, transformers, transmission lines, and loads. A bus may thus provide a common electrical connection point and facilitates efficient power flow management within a substation or distribution network. A bus is typically formed from high-conductivity materials such as copper or aluminum and is designed to handle high current levels while maintaining system stability and reliability. Depending on the system requirements, the bus configuration may include single or multiple parallel conductors and may support various topologies, such as single bus, double bus, ring bus, or breaker-and-a-half arrangements, to optimize redundancy, flexibility, and fault tolerance.

Fig. 1b schematically illustrates a portion of an electrical power system EPS. The EPS comprises at least one protected component, PC, which is electrically connected between a first electrical power system EPS₁ and a second electrical power system EPS₂ via a first circuit breaker CB₁ and a second circuit breaker CB₂, respectively. The protected component PC may be protected by a differential protection method according to the present disclosure. A first current I₁ may be measured by a first current transformer CT₁. A second current I₂ may be measured by a second current transformer CT₂. The differential protection method may consider a combined current, referred to as an operating current I_{O}, which may be determined as the sum of the first current I₁ and the second current I₂. The electrical power system EPS comprises a first bus BUS₁ and a second bus BUS₂ by which the electrical power system EPS may electrically connect with other electrical power systems, e.g., a first electrical power system EPS₁ and a second electrical power system EPS₂, respectively. In Fig. 1b, the first substation and the second substation are omitted for simplicity.

In a non-limiting example, a method for differential protection of a power line PL electrically connected between a first substation 10₁ and a second substation 10₂ of an electrical power system, implemented by at least a first protective relay arranged at the first substation 10₁, comprises: receiving local current and voltage data indicative of each phase of local current and local voltage of the power line PL at the first substation 10₁ and remote current and voltage data indicative of each phase of remote current and remote voltage of the power line PL at the second substation 10₂; determining whether a plurality of internal fault conditions are satisfied based on a comparison of said local current and voltage data and said remote current and voltage data, and if said plurality of internal fault conditions are satisfied, generating a first tripping signal to a first circuit breaker CB₁ to disconnect the power line PL from the first substation 10₁. The plurality of internal fault conditions comprises: at least one internal fault detection condition comprising a first internal fault detection condition and a second fault detection condition, wherein the first and second internal fault detection conditions are given by ${Diff}_{p_based} > {K}_{r} \times {Restraint}_{p _ based}$ ${Diff}_{p_based} > {P}_{pickup _ setting}$ wherein *Diff*_{p_based} corresponds to an active power-based differential quantity being the difference between a local active power-based quantity based on the local current and voltage data and a remote active power-based quantity based on the remote current and voltage data, and wherein *Restraint_{p_based}* corresponds to an active power-based restraint quantity based at least on the local active power-based quantity and the remote active power-based quantity, and wherein *Kᵣ* corresponds to a scaling parameter, and *P_{pickup_setting}* corresponds to a threshold level for the active power based differential quantity.

In a first embodiment, *Diff_{p_based}* is a differential active power *Diff*_{p,x} based at least on a difference between a local active power based on the local current and voltage data of for an arbitrary phase X and a remote active power based on the remote current and voltage data for phase X, wherein *Restraint_{p_based}* is a restraint active power *Restraint_{p,x}* based at least on the local active power and the remote active power for phase X, and *P_{pickup_setting}* corresponds to a threshold level for the differential active power for phase X. The method may be implemented for differential protection of each phase respectively, e.g., for each phase in a three-phase system.

In a second embodiment, *Diff_{p_based}* is a differential active composite power *Diff_{p_cmp}* based at least on a difference between a local active composite power calculated based at least on local sequence components active power and a remote active composite power calculated based at least on remote sequence components active power, wherein the local sequence components active power and the remote sequence components active power are based at least on the local current and voltage data and the remote current and voltage data, respectively, wherein *Restraint_{p_based}* is a restraint active composite power *Restraint_{p_cmp}* based at least on the local active composite power and the remote active composite power, and *P_{pickup_setting}* corresponds to a threshold level for the active composite power. The sequence components active power may be based on three-phase voltages and currents.

The method for differential protection may implement either the first embodiment or the second embodiment, or both.

The method implementing the first embodiment according to some embodiments will now be detailed further. In an arbitrary phase X, fundamental phasors of local voltage *U_{x,local}* and local current *I_{x,local}* may be based on current and voltage measurements provided by means of a CT and a VT at the first substation, respectively. Similarly, the fundamental phasors of remote voltage *U_{x,remote}* and remote current *I_{x,remote}* may be based on current and voltage measurements provided by means of a CT and a VT at the second substation, respectively. X may represent any phase, for instance any phase a, b, c in a three-phase system.

The active power *P_{x,local}*, *P_{x,remote}* for phase X at local and remote substations respectively may be calculated as ${P}_{x , local} = Re \left\{{U}_{x , local}{I}_{x , local}^{∗}\right\} = \left|{U}_{x , local}\right| \left|{I}_{x , local}\right| cos \left({θ}_{Ux , local}-{θ}_{Ix , local}\right)$ ${P}_{x , remote} = Re \left\{{U}_{x , remote}{I}_{x , remote}^{∗}\right\} = \left|{U}_{x , remote}\right| \left|{I}_{x , remote}\right| cos \left({θ}_{Ux , remote}-{θ}_{Ix , remote}\right)$ wherein *Re*{...} indicates real component, *θ_{Ux,local} - θ_{Ix,local}* is the phase difference between local voltage and local current, and *θ_{Ux,remote} - θ_{Ix,remote}* is the phase difference between remote voltage and remote current.

The differential active power of phase X may be calculated as ${Diff}_{p , x} = {P}_{x , local} + {P}_{x , remote}$

The restraint active power *Restraint_{p,x}* may be calculated as ${Restraint}_{p , x} = \left|{P}_{x , local}\right| + \left|{P}_{x , remote}\right|$

In such a case, the first and second internal fault detection condition may be given by ${Diff}_{p , x} > {K}_{r} \times {Restraint}_{p , x}$ ${Diff}_{p , x} > {P}_{pickup _ setting}$

If the first and second internal fault conditions are satisfied, the first protective relay may generate a tripping signal, causing the first circuit breaker CB₁ to activate.

The value of the scaling parameter *Kᵣ* may be selected in a non-limiting range of 0.2-0.6, e.g., a value equal to 0.5. It should be noted that the differential power *Diff*_{p,x} could be negative based on the power flow during fault. The differential active power may alternatively be determined based on absolute values of the local and remote active power *P_{x,local}, P_{x,remote}* so that the differential active power is always positive.

In case of low fault impedance near a terminal of the power line, the measured voltage at a substation may be low and a calculation error may be generated. As a result, the differential active power *Diff*_{p,x} may potentially reflect inaccurate conditions of the power line and the method for differential protection may result in maloperation during external faults or fail to generate tripping signals for internal faults. Thus, an auxiliary criterion may be used. Current amplitude at two substations at respective ends of the power line may be used to discriminate internal faults from external faults.

According to some embodiments, the plurality of internal fault conditions comprises: at least one internal fault discrimination condition comprising a first internal fault discrimination condition given by ${IEFD}_{x , local} or {IEFD}_{x , remote} > {IEFD}_{Th , x}$ wherein *IEFD*_{x,local} and *IEFD*_{x,remote} correspond to a respective local and remote internal/external fault discrimination, IEFD, index determined as ${IEFD}_{x , local} = \frac{\left|{I}_{x , local}\right|}{\left|{I}_{x , remote}\right|} {IEFD}_{x , local} = \frac{\left|{I}_{x , remote}\right|}{\left|{I}_{x , local}\right|}$ wherein *IEFD*_{Th,x} corresponds to a IEFD index threshold indicative of an internal fault, wherein for phase power, x represents a respective phase of current, and wherein for composite power, x represents positive sequence component.

The first protective relay R₁ and the second protective relay R₂ may communicate with one another to share local and remote current and voltage data via a communication link CL. The communication link CL may be stablished via an optical fiber or a non-dedicated communication network, such as an ethernet-based network or a cloud-based network. As characteristics of non-dedicated communication networks have stochastic nature in general, a security index may be implemented to account for an impact of non-dedicated communication network characteristics. A holding timer as a security index may thus be introduced to cover the impact of such a network especially for communication latency, which may significantly impact the decision-making process of the respective protective relays R₁, R₂. Due to latency and time-synchronization characteristics of non-dedicated communication networks, data captured may on occasion not be in a correct sequence. As a results, it may be advantageous to buffer captured data (such as local/remote current and voltage data) and adjust them in correct sequence according to their timestamp.

According to some embodiments, the plurality of internal fault conditions comprises: at least one internal fault discrimination condition comprising a second internal fault discrimination condition (imperfect communication condition) given by ${T}_{hold _ time} > {T}_{predetermined _ th}$ wherein *T_{hold_time}* corresponds to a holding time indicative of whether a time discrepancy between a first timing of the local current and voltage data and a second timing of the remote current and voltage data exceeds a predetermined time period, wherein *T_{predetermined_th}* corresponds to a predetermined time period accounting for Maximum Synchronization Error Time *T_{time_sync_max}*, Communication Latency *T_{latency_max},* and/or a safety of margin *T_{security}* as ${T}_{hold _ time} = {T}_{time _ sync _ max} + {T}_{latency _ max} + {T}_{security}$

In a non-limiting example, a value for *T_{time_sync_max}, T_{latency_max}, T_{security}* may be 5 ms, 27 ms and 10 to 20 ms, respectively. These values lead to *T_{hold_time}* being equal to approximately 3 cycles (considering 50 Hz system frequency.) That is, *T_{predetermined_th}* may be selected corresponding to 3 cycles.

The tripping signal is sent if all internal fault conditions (detection or discrimination) are satisfied.

As a further option, the IEFD index threshold may be an adaptive IEFD index threshold. The adaptive IEFD index threshold may be based at least on the local current data and the remote current data, wherein the adaptive IEFD index threshold is updated by ${IEFD}_{Th , x} = {IEFD}_{Th , x , 0} + \left(1-max\left(Δ{IEFD}_{x , local},Δ{IEFD}_{x , remote}\right)\right)$ wherein *IEFD*_{Th,x,0} is a predetermined initial threshold, and Δ*IEFD*_{x,local} and Δ*IEFD*_{x,remote} correspond to respective IEFD index derivatives determined as $Δ {IEFD}_{x , local} = \frac{{\sum }_{i - N}^{N} {IEFD}_{x , local , i}}{N} Δ {IEFD}_{x , remote} = \frac{{\sum }_{i - N}^{N} {IEFD}_{x , remote , i}}{N}$ wherein *IEFD*_{x,local,i} and *IEFD*_{x,local,i} correspond to samples of the respective IEFD indices and N indicates the number of samples.

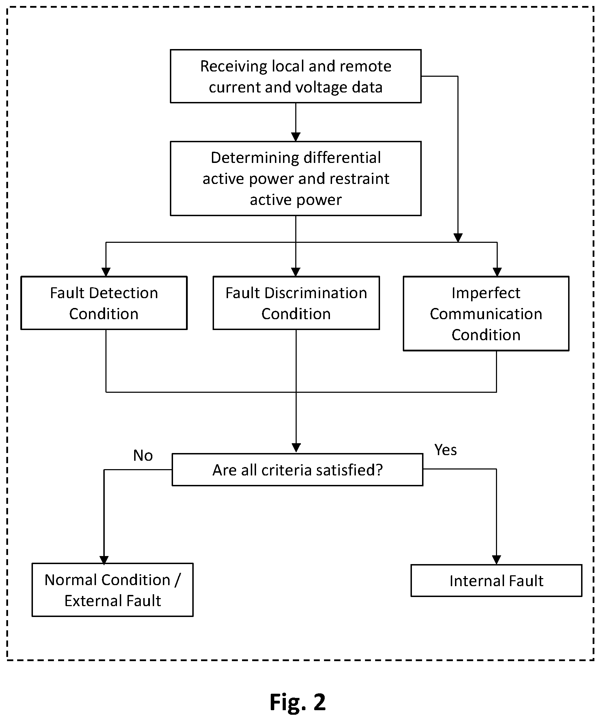

Fig. 2 shows a flow chart of the method according to some embodiments. The method comprises receiving local and remote current and voltage data. The method comprises determining differential active power and restraint active power for each phase. The method comprises determining whether a plurality of internal fault conditions is satisfied based on a comparison of said local current and voltage data and said remote current. Specifically, the plurality of internal fault conditions comprises at least one fault detection condition, at least one fault discrimination condition, and an imperfect communication condition as described previously. If all conditions are satisfied, then a disturbance is detected as an internal fault. If at least one condition is not satisfied, then a disturbance is detected as an external fault or normal condition.

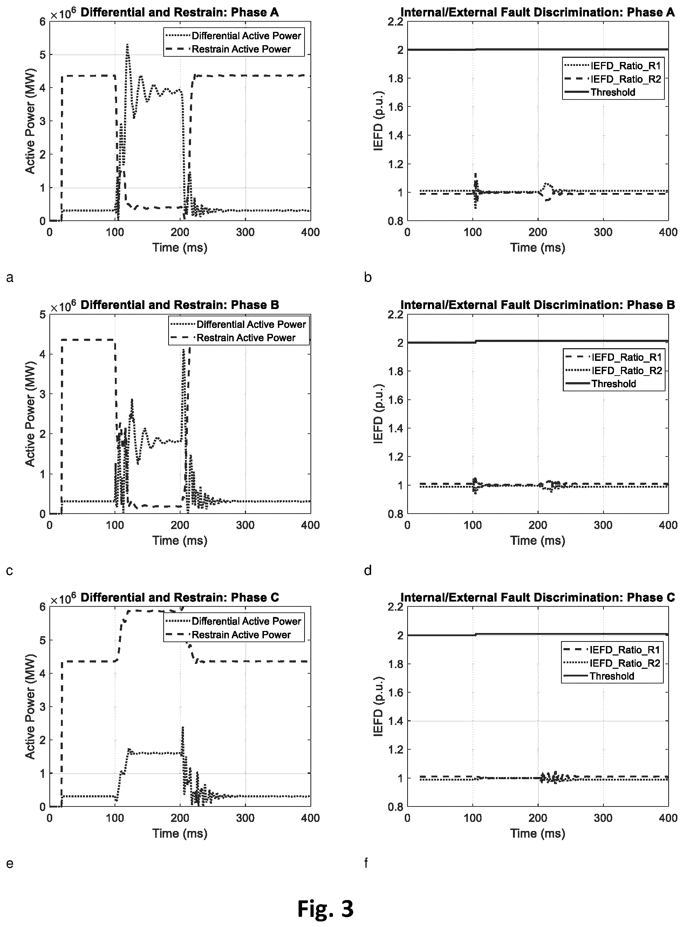

The above method implementing active power-based internal fault detection was simulated for a 110 kV three-phase electrical power system comprising a 60 km long power line experiencing an external fault near the first bus BUS₁ outside the protected zone. The results are shown in Fig. 3. Subfigure a of Fig. 3 shows the differential active power (dotted line) and the restraint active power (dashed line) for Phase A. The horizontal axis represents Time in milliseconds (ms), while the vertical axis represents Active Power in Megawatts (MW). Subfigure c of Fig. 3 shows the differential active power (dotted line) and the restraint active power (dashed line) for Phase B. The horizontal axis represents Time (ms), while the vertical axis represents Active Power (MW). Subfigure e of Fig.3 shows the differential active power (dotted line) and the restraint active power (dashed line) for Phase C. The horizontal axis represents Time (ms), while the vertical axis represents Active Power (MW). Meanwhile, subfigures b, d, f of Fig. 3 show internal/external fault discrimination IEFD_Ratio_R1 (dotted line), IEFD_Ratio_R2 (dashed line) and the Threshold for internal fault discrimination (solid line) for the respective phases A, B, C. In each subfigure b, d, f, the horizontal axis represents Time (ms), while the vertical axis represents the value of the IEFD index in per unit system (p.u.). Here, IEFD_Ratio_R1 corresponds to *IEFD*_{x,local}, IEFD_Ratio_R2 corresponds to *IEFD*_{x,remote}, and Threshold corresponds to *IEFD*_{Th,x*.*} As shown in subfigures a, c, e of Fig. 3, the simulated external fault causes a disturbance between approximately 100 ms and 200 ms. During this time interval, the differential active power for both phase A and phase B becomes elevated and larger than their restraint active power, although for phase C the differential active power remains below the restraint active power during this time interval. As shown in subfigures b, d, f of Fig. 3, the local and remote IEFD index for the respective phases remain below the IEFD index threshold, thus discriminating the simulated external fault indeed as an external fault for all phases. Thus, maloperation of the first protective relay and the second protective relay is avoided.

The method according to some embodiments implementing composite power-based differential protection will now be detailed further. Fundamental frequency phasors for three-phase voltages *Uₐ, U_{b}, U_{c}* and currents *Iₐ, I_{b}, I_{c},* based on respective voltage and current measurements for the respective phases, can be transformed into sequence components both for currents and voltages by using symmetrical component transformation equation as follows $\left(\begin{matrix}{I}_{0} \\ {I}_{1} \\ {I}_{2}\end{matrix}\right) = \frac{1}{3} \left(\begin{matrix}1 & 1 & 1 \\ 1 & a & {a}^{2} \\ 1 & {a}^{2} & a\end{matrix}\right) \left(\begin{matrix}{I}_{a} \\ {I}_{b} \\ {I}_{c}\end{matrix}\right)$ $\left(\begin{matrix}{U}_{0} \\ {U}_{1} \\ {U}_{2}\end{matrix}\right) = \frac{1}{3} \left(\begin{matrix}1 & 1 & 1 \\ 1 & a & {a}^{2} \\ 1 & {a}^{2} & a\end{matrix}\right) \left(\begin{matrix}{U}_{a} \\ {U}_{b} \\ {U}_{c}\end{matrix}\right)$ wherein *a* = -0.5 + *j*0.866 and *a*² = -0.5 - *j*0.866 . The fundamental frequency phasors for the three-phase voltages *Uₐ, U_{b}, U_{c}* and currents *Iₐ, I_{b}, I_{c}* may be obtained via Discrete Fourier Transform, DFT, analysis of the local and remote current and voltage data.

A corresponding sequence power may be calculated by using sequence currents and voltages as follows ${S}_{0} = {U}_{0} \times {I}_{0}^{∗}$ ${S}_{1} = {U}_{1} \times {I}_{1}^{∗}$ ${S}_{2} = {U}_{2} \times {I}_{2}^{∗}$ wherein "*" indicates complex conjugation before multiplication is performed. Composite sequence power can be calculated as follows. $\begin{matrix}{S}_{cmp} = {K}_{1} \times {S}_{1} - {K}_{2} \times {S}_{2} - {K}_{0} \times {S}_{0} \\ = {P}_{cmp} + {jQ}_{cmp}\end{matrix}$ wherein *K*₁, *K*₂, and *K*₀ are user-specified parameters. One non-limiting example, which is a simple approach, is to set *K*₁ = *K*₂ *= K*₀ = 1.0. However, the parameters may be assigned different values in order to balance an impact of some sequence components in the total value of the composite sequence power. Note further that negative and zero sequence power are intentionally taken with a negative sign. That is done in order to increase sensitivity of the method for differential protection. This method may respond to all types of faults which are feasible in a three-phase power system. Further, the equation for composite sequence power can be in per-unit system.

The differential composite active power *Diff*_{p_cmp} and the restraint active composite power *Restraint_{p_cmp}* may be calculated as follows. ${Diff}_{p_cmp} = {P}_{cmp _ local} - {P}_{cmp _ remote}$ ${Restraint}_{p_cmp} = \left|{P}_{cmp _ local}\right| + \left|{P}_{{cmp}_{remote}}\right|$

In such a case, the first and second internal fault condition are given by ${Diff}_{p _ cmp} > {K}_{r} \times {Restraint}_{p _ cmp}$ ${Diff}_{p _ cmp} > {P}_{pickup _ setting}$

The composite power-based differential protection may in similar fashion implement fault discrimination conditions to enhance ability to distinguish internal faults from external faults. The fault discrimination condition and the imperfect communication condition may be determined as detailed for active power-based differential protection as described above.

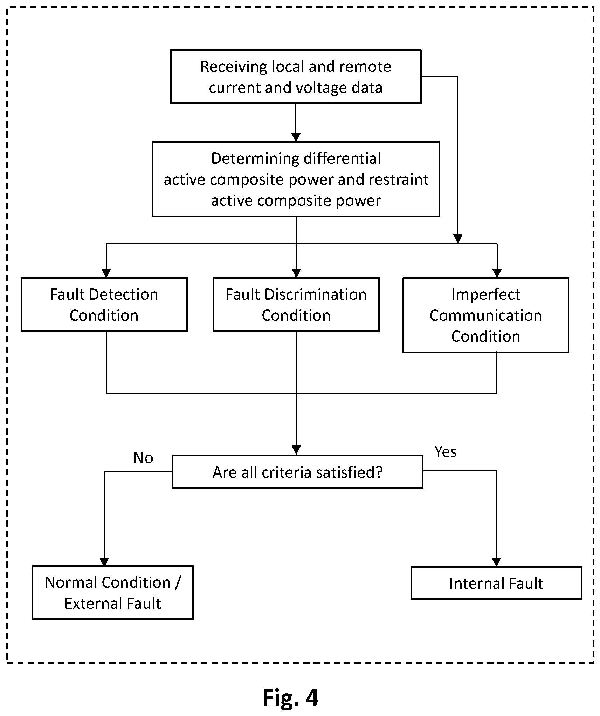

Fig. 4 shows a flow chart of the method according to some embodiments. The method comprises receiving local and remote current and voltage data. The method comprises determining differential active composite (sequence) power and restraint active composite (sequence) power. The method comprises determining whether a plurality of internal fault conditions is satisfied based on a comparison of said local current and voltage data and said remote current. Specifically, the plurality of internal fault conditions comprises at least one fault detection condition, at least one fault discrimination condition, and an imperfect communication condition as described previously. If all conditions are satisfied, then a disturbance is detected as an internal fault. If at least one condition is not satisfied, then a disturbance is detected as an external fault or normal condition.

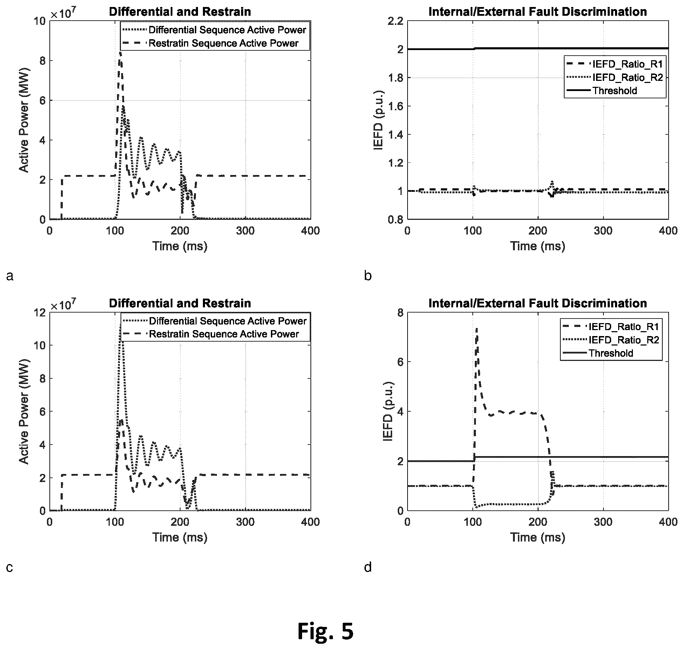

The above method implementing sequence active power was simulated for two different scenarios (external fault and internal fault) for a 110 kV three-phase electrical power system comprising a 60 km long power line. The results are shown in Fig. 5. Subfigure a of Fig. 5 shows the differential sequence active power (dotted line) and the restraint sequence active power (dashed line) for the first scenario relating to an external fault. The horizontal axis represents Time (ms), while the vertical axis represents Active Power (MW). Subfigure c of Fig. 5 shows the differential sequence active power (dotted line) and the restrain sequence active power (dashed line) for the second scenario. The horizontal axis represents Time (ms), while the vertical axis represents Active Power (MW). Meanwhile, subfigures b, d of Fig. 5 show internal/external fault discrimination IEFD_Ratio_R1 (dashed line), IEFD_Ratio_R2 (dotted line) and the Threshold for internal fault discrimination (solid line) for the respective phases A, B, C. Here, IEFD_Ratio_R1 corresponds to *IEFD*_{x,local}, IEFD_Ratio_R2 corresponds to *IEFD*_{x,remote}, and Threshold corresponds to *IEFD*_{Th*,*x}*.* As shown in subfigure a of Fig. 5, the power line is subjected to a disturbance between approximately 100 ms and 200 ms according to a first scenario relating to an external fault. During this time interval, the differential sequence active power becomes elevated and larger than the restraint sequence active power. As shown in subfigure b of Fig. 5, the local and remote IEFD index for this scenario remain below the IEFD index threshold, thus discriminating the simulated event as an external fault. In a second scenario, relating to an internal fault, as shown in subfigure c of Fig. 5, the power line is subjected once more to a disturbance between approximately 100 ms and 200 ms. During this time interval, the differential sequence active power becomes elevated and larger than the restrain sequence active power. However, as shown in subfigure d of Fig. 5, the local IEFD index for this scenario becomes elevated and larger than the IEFD index threshold, whereas the remote IEFD index for this scenario remain below the IEFD index threshold. Thus, the local IEFD index is larger than the IEFD index threshold, discriminating the simulated event as an internal fault.

The method for differential protection disclosed herein can robustly detect the internal fault of a (MV) power line. Moreover, the method can distinguish between internal fault and external fault for all cases, in particular faults near busbars with the help of using new IEFD indices. Further, the method may be phasor-based, meaning that locally calculated phasors of current and voltages are communicated through the communication link leading to smaller impact from non-dedicated communication networks. The method may also provide a phase segmented differential protection (due to nature of IEFD) and therefore can distinguish a faulted phase compared to other methods of differential protection. The method may advantageously tolerate high fault impedance and time-synchronization errors up to 20 millisecond or more depending on implementation. The sensitivity of imperfect communication condition can be adjusted by monitoring network traffic, etc. This advantageously allows the method to be more reliable considering non-dedicated communication network characteristics.

The method for differential protection may be implemented by at least one protective relay R₁, R₂. A differential protective system may comprise the at least one protective relay R₁, R₂. The differential protective system may provide differential protection of a power line PL (or a component in general) electrically connected between a first substation 10₁ of an electrical power system EPS and a second substation 10₂. The differential protective system may be configured to be arranged at the first substation 10₁ and be communicatively connected to at least a first circuit breaker CB₁ for disconnecting the power line PL (or the component in general) from the first substation 10₁. A second cooperating protective system may be arranged at the second substation 10₂. The second protective system may comprise a second protective relay configured to implement the method for differential protection herein disclosed. The second protective relay may be configured to generate a second tripping signal to a second circuit breaker CB₂ when the plurality of internal fault conditions is satisfied to disconnect the power line PL (or the component in general) from the second substation 10₂.

While the foregoing is directed to embodiments of the disclosure, other and further embodiments may be devised without parting from the inventive concept discussed herein. The scope of the invention is however determined by the claims.

## Claims

1. A method for differential protection of a power line (PL) electrically connected between a first substation (10₁) and a second substation (10₂) of an electrical power system (EPS), the method implemented by at least a first protective relay arranged at the first substation (10₁), the method comprising:
receiving local current and voltage data indicative of each phase of local current and local voltage of the power line (PL) at the first substation (10₁) and remote current and voltage data indicative of each phase of remote current and remote voltage of the power line (PL) at the second substation (10₂);
determining whether a plurality of internal fault conditions is satisfied based on a comparison of said local current and voltage data and said remote current and voltage data, and
if said plurality of internal fault conditions are satisfied, generating a first tripping signal to a first circuit breaker (CB₁) to disconnect the power line (PL) from the first substation (10₁),
wherein said plurality of internal fault conditions comprises:
at least one internal fault detection condition comprising a first internal fault detection condition and a second fault detection condition, wherein the first and second internal fault detection conditions are given by ${Diff}_{p _ based} > {K}_{r} \times {Restraint}_{p _ based}$ ${Diff}_{p _ based} > {P}_{pickup _ setting}$
wherein *Diff*_{p_based} corresponds to an active power-based differential quantity being the difference between a local active power-based quantity based on the local current and voltage data and a remote active power-based quantity based on the remote current and voltage data, *Restraint_{p_based}* corresponds to an active power-based restraint quantity based at least on the local active power-based quantity and the remote active power-based quantity, *Kᵣ* corresponds to a scaling parameter, and *P_{pickup_setting}* corresponds to a threshold level for the active power-based differential quantity.

2. The method according to claim 1, wherein *Diff*_{p_based} is a differential active power *Diff*_{p,x} based at least on a difference between a local active power based on the local current and voltage data and a remote active power based on the remote current and voltage data, wherein *Restraint_{p_based}* is a restraint active power *Restraint_{p,x}* based at least on the local active power and the remote active power, and *P_{pickup_setting}* corresponds to a threshold level for the active power, wherein x indicates phase of current and voltage.

3. The method according to any of the preceding claims, wherein *Diff_{p_based}* is a differential active composite power *Diff*_{p_cmp} based at least on a difference between a local active composite power calculated based at least on local sequence components active power and a remote active composite power calculated based at least on remote sequence components active power, wherein the local sequence components active power and the remote sequence components active power are based at least on the local current and voltage data and the remote current and voltage data, respectively, wherein *Restraint_{p_based}* is a restraint active composite power *Restraint*_{*p_*cmp} based at least on the local active composite power and the remote active composite power, and *P_{pickup_setting}* corresponds to a threshold level for the active composite power.

4. The method according to any of the preceding claims, wherein said plurality of internal fault conditions comprises:
at least one internal fault discrimination condition comprising a first internal fault discrimination condition given by ${IEFD}_{x , local} or {IEFD}_{x , remote} > {IEFD}_{Th , x}$
wherein *IEFD*_{x,local} and *IEFD*_{x,remote} correspond to a respective local and remote internal/external fault discrimination, IEFD, index determined as ${IEFD}_{x , local} = \frac{\left|{I}_{x , local}\right|}{\left|{I}_{x , remote}\right|} {IEFD}_{x , local} = \frac{\left|{I}_{x , remote}\right|}{\left|{I}_{x , local}\right|}$
wherein *IEFD*_{Th,x} corresponds to a IEFD index threshold indicative of an internal fault,
wherein for phase power, x represents a respective phase of current, and wherein for composite power, x represents positive sequence component.

5. The method according to claim 4, wherein the IEFD index threshold is a predetermined IEFD index threshold.

6. The method according to claim 4, wherein the IEFD index threshold is an adaptive IEFD index threshold based at least on the local current data and the remote current data, wherein the adaptive IEFD index threshold is updated by ${IEFD}_{Th , x} = {IEFD}_{Th , x , 0} + \left(1-max\left(Δ{IEFD}_{x , local},Δ{IEFD}_{x , remote}\right)\right)$ wherein *IEFD*_{Th,x,0} is a predetermined initial threshold, and Δ*IEFD*_{x,local} and Δ*IEFD*_{x,remote} correspond to respective IEFD index derivatives determined as $Δ {IEFD}_{x , local} = \frac{{\sum }_{i - N}^{N} {IEFD}_{x , local , i}}{N} Δ {IEFD}_{x , remote} = \frac{{\sum }_{i - N}^{N} {IEFD}_{x , remote , i}}{N}$ wherein *IEFD*_{x,local,i} and *IEFD*_{x,local,i} correspond to samples of the respective IEFD indices and N indicates the number of samples.

7. The method according to any one of the preceding claims, wherein said plurality of internal fault conditions comprises:
at least one internal fault discrimination condition comprising a second internal fault discrimination condition given by ${T}_{hold _ time} > {T}_{predetermined _ th}$
wherein *T_{hold_time}* corresponds to a holding time indicative of whether a time discrepancy between a first timing of the local current and voltage data and a second timing of the remote current and voltage data exceeds a predetermined time period, wherein *T_{predetermined_th}* corresponds to a predetermined time period accounting for Maximum Synchronization Error Time, Communication Latency, and/or a safety of margin.

8. The method according to any of the preceding claims, wherein the local current and voltage data and the remote current and voltage data comprise sample-based values and/or phasor-based values of the local current and the remote current and/or the local voltage and the remote voltage, respectively.

9. The method according to any one of claims 1-8, wherein the method is implemented by the first protective relay (R₁) and a second protective relay (R₂), wherein the first tripping signal is generated by the first protective relay (R₁) to activate the first circuit breaker (CB₁) and a second tripping signal is generated by the second protective relay (R₂) to activate a second circuit breaker (CB₂) for disconnecting the power line (PL) from the second substation (10₂).

10. The method according to claim 9, wherein the first tripping signal and the second tripping signal are only generated when the first protective relay (R₁) and the second protective relay (R₂) have exchanged information indicating that at least one of the first protective relay (R₁) and the second protective relay (R₂) has determined that the at least one internal fault condition is satisfied.

11. The method according to any one of the preceding claims, wherein a communication link between the first substation and the second substation is established via a non-dedicated communication network or an optical fiber cable.

12. The method according to any one of the preceding claims, wherein the method is applied for each phase of currents in the power line comprising three phase conductors.

13. A differential protective system for differential protection of a power line (PL) electrically connected between a first substation (10₁) of an electrical power system (EPS) and a second substation (10₂), the differential protective system configured to be arranged at the first substation (10₁) and be communicatively connected to at least a first circuit breaker (CB₁) for disconnecting the power line (PL) from the first substation (10₁), the protective system comprising:
at least one protective relay configured to perform the method according to any one of claims 1-11.

14. Electrical power system comprising:
a first substation (10₁) comprising a first circuit breaker (CB₁);
a power line (PL) configured to be electrically connected between the first substation (10₁) and a second substation (10₂), and
the differential protective system according to claim 13, wherein a first protective relay of the at least one protective relay is arranged at the first substation.

15. The electrical power system according to claim 14, comprising the second substation (10₂), wherein a second protective relay of the at least one protective relay is arranged at the second substation (10₂).
